# EUROPEAN PATENT SPECIFICATION

(11) **EP 4 216 209 B1**
(45) Date of publication and mention of the grant of the patent: **11.09.2024**
(21) Application number: 22210599.1
(22) Date of filing: 30.11.2022
(51) Int. Cl.: G10L 15/183, G10L 15/08, G10L 15/16, G10L 15/22

(54) **SPEECH RECOGNITION METHOD, TERMINAL AND STORAGE MEDIUM**
SPRACHERKENNUNGSVERFAHREN, ENDGERÄT UND SPEICHERMEDIUM
PROCÉDÉ DE RECONNAISSANCE VOCALE, TERMINAL ET SUPPORT D'ENREGISTREMENT

(30) Priority: 19.01.2022 CN 202210058885
(43) Date of publication of application: 26.07.2023
(73) Proprietor: Guangzhou Xiaopeng Motors Technology Co., Ltd., Guangzhou, Guangdong 510000 (CN)
(72) Inventor: Zhang, Liao, Guangzhou 510630 (CN)
(74) Representative: Habermann, Hruschka & Schnabel

(56) References cited:
- US-A1- 2008 091 435
- US-A1- 2020 349 923

## Description

### FIELD

The present disclosure relates to the field of computer technologies, and more particularly, to a speech recognition method, a speech recognition apparatus, a vehicle-mounted terminal, and a computer storage medium.

### BACKGROUND

To achieve better speech recognition of a user by a language model, the language model can be constructed based on the user's information to facilitate recognition of the user's speech based on the speech and improve accuracy of speech recognition.

At present, a process of constructing a language model mainly involves: obtaining candidate words by decoding based on a general-purpose neural network model, and introducing resource information for score interpolation reordering to obtain a normal decoding result having user characteristics, thereby recognizing the user's speech. However, in this manner, the resource information is introduced after obtaining the candidate words through the decoding. Thus, the introduced resource information is not really involved in the decoding. Accordingly, an activation cannot be obtained when no correct answer exists in the candidate words, thereby causing a problem of inaccurate speech recognition.

US 2020/349923 A1 proposes to (i) obtain, on the basis of a user's current position, information identifying words in a foreign language likely to be encountered in a user's speech request in addition to words in the user's native language, (ii) map a phoneme set for the foreign language to one for the user's native language to enable modelling of foreign words in a phoneme-level biasing finite state transducer (FST), and (iii) perform recognition of the user's speech request by applying the FST in addition to a separate wordpiece-phoneme model for the native language

US 2008/091435 A1 discloses speech recognition based on hierarchical trees, wherein (i) each node is associated with a language model, (ii) a first/generic tree is built based on information about all categories (e.g. restaurants) across all recognizable locations, and a second tree is built based on information about all categories within the user's location, and (iii) when a a user asks for information, the user's speech is recognized based on a combination of the language models of the first and second tree.

### SUMMARY

In view of the above problems, the present invention, as set out in the independent claims 1, 14 and 15, provides a speech recognition method, a speech recognition apparatus, a vehicle-mounted terminal, and a computer storage medium, aiming to overcome or at least partially solve the above problems. Preferred embodiments of the invention are set out in the dependent claims.

The present invention has the following advantages: The position information of the user and the language information of the speech request are obtained in response to the speech request of the user. The position information of the user and the language information of the speech request have each the word tree of the corresponding dimension of information. The word trees of different dimensions of information are used to merge into the merged word tree. The speech request of the user is recognized based on the merged word tree. With the word tree-based approach, the user-related position information and language are integrated and introduced to recognize the speech request of the user. Therefore, the resource information introduced in the form of word tree participates in the recognition of the speech request, thereby avoiding a problem of inaccurate speech recognition. In addition, by merging of the word trees relevant to the different dimensions of information, the accuracy of the speech recognition for the user can be increased, and thus the user experience can be improved.

### BRIEF DESCRIPTION OF THE DRAWINGS

FIG. 1 is a schematic diagram of a process of speech recognition known in the related art;
FIG. 2 is a schematic model diagram of a multilingual acoustic model known in the related art;
FIG. 3 is a schematic model diagram of a language model in the related art;
FIG. 4 is a flowchart of a speech recognition method provided by the present disclosure;
FIG. 5 is a schematic diagram of a process of generating a vector word tree provided by the present disclosure;
FIG. 6 is a schematic diagram of a language model for recognition provided by the present disclosure;
FIG. 7 is schematic diagram of a process of merging multi-dimensional vector word trees provided by the present disclosure;
FIG. 8 is a schematic diagram of offline merging of word trees provided by the present disclosure;
FIG. 9 is a schematic diagram of virtual merging of word trees provided by the present disclosure;
FIG. 10 is a schematic diagram involving an activation processing policy setting provided by the present disclosure; and
FIG. 11 is a structural block diagram of a speech recognition apparatus provided by the present disclosure.

### DETAILED DESCRIPTION

In order to clarify and explain the above objects, features, and advantages of the present disclosure, the present disclosure will be further described in detail below in conjunction with the accompanying drawings and specific embodiments.

To achieve better speech recognition of a speech request of a user based on a language model, the language model can be constructed based on the user's resource information to facilitate recognition of the user's speech using speech and improve accuracy of speech recognition.

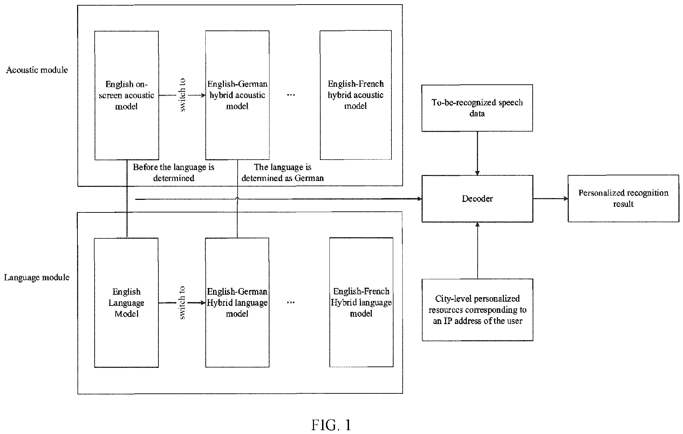

At present, a process of constructing a language model may be implemented mainly based on an introduction of the resource information for score interpolation reordering after decoding is completed. Specifically, FIG. 1 illustrates a schematic diagram of a process of speech recognition known in the related art. Referring to FIG. 1, in the related art, a language of to-be-recognized speech data is recognized by a multilingual acoustic model in accordance with a language model corresponding to the language, and in a process of decoding, by a decoder, the speech data in accordance with the corresponding language, an Internet Protocol (IP) address of the user may be received to call resources of a city where the corresponding IP address is located, thereby improving a recognition rate.

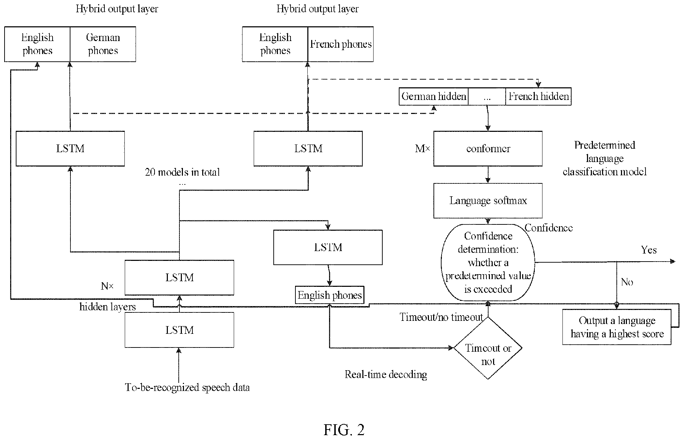

Language recognition of the speech request of the user may be achieved by means of a multilingual acoustic model as illustrated in FIG. 2. The multilingual acoustic model constructed may be based on a neural network having different hidden layers included in a plurality of hybrid bilingual models, e.g., more than 20 hybrid bilingual models, including an English-German bilingual model (neural network layers thereof, e.g., N Long Short-Term Memory (LSTM) hidden layers, may be used to output English factor feature vectors and German factor feature vectors for score softmax-based calculation via a hybrid output layer thereof) and an English-French bilingual model (neural network layers thereof, e.g., M LSTM hidden layers, may be used to output English factor feature vectors and French factor feature vectors for score softmax-based calculation via a hybrid output layer thereof). Specifically, the hidden layers of the plurality of hybrid bilingual models may be categorized into lower hidden layers and higher hidden layers based on a predetermined ratio. The lower hidden layers, e.g., the N LSTM hidden layers, may be merged to generate a sharing hidden layer. The multilingual acoustic model may be constructed based on the sharing hidden layer obtained from the lower hidden layers and the higher hidden layers having distinct language features. While an output result of the merged sharing hidden layer is used as an input to the higher hidden layers, a hidden layer of a predetermined language model may be added to an output layer of the sharing hidden layer to use the output result of the sharing hidden layer as an input to the predetermined language model. In this way, the speech data may be displayed in a predetermined language before a language of the speech data is determined. The predetermined language may be a language that is widely used for a certain region. For example, for recognition of a language of the user's speech in European countries, English is a widely used language in European countries. In this case, an English model may be adopted for displaying on the screen. In addition, a plurality of output layers of the higher hidden layers of the plurality of hybrid bilingual models may serve as input layers for training a predetermined language classification model to construct the predetermined language classification model. Multidimensional feature vectors used to characterize a second output result may be stitched based on corresponding dimensions. For example, as illustrated in FIG. 2, the respective language feature vectors, e.g., German hidden features and French hidden features, are stitched together. The stitched language features are used as an input layer of the predetermined language classification model. The predetermined language classification model may be constructed to have M convolutional layers, which are used to calculate language scores by softmax to obtain a confidence for each language. A corresponding language may be determined with the predetermined language classification model based on the confidence for each language.

For each word in inputted consecutive frames of a predetermined length, when there is only one confidence greater than a predetermined value, i.e., when there is a certain confidence exceeding a confidence threshold for a language, a language corresponding to this confidence is determined to be a language corresponding to the to-be-recognized speech data, regardless of whether decoding performed on the to-be-recognized speech data to obtain words has timed out (i.e., exceeded an amount of words). In another case, when there are two or more confidences greater than the predetermined value, a language corresponding the highest confidence thereof is determined to be the language corresponding to the to-be-recognized speech data. In yet another case, when none of the confidences reaches the predetermined value, a language corresponding to the highest confidence among these confidences is determined to be the language of the to-be-recognized speech data. The predetermined value may be a confidence threshold for each language. The embodiments of the present disclosure are not limited in this regard.

The output results of the lower hidden layers and the higher hidden layers are usually cached. In this case, before the language is determined based on the language classification model, for a region where English is the widely used language, the to-be-recognized speech data may be displayed in English on screen based on the English model (including an English acoustic model and an English language model) to guarantee a good user experience. After a language classification result is determined based on a language classification model, regarding the cached output results of the higher hidden layers, a hybrid output layer of a corresponding hybrid bilingual model may be activated for softmax-based calculation, while initiating a normal decoding of a language model for the corresponding language. The softmax-based calculation, as a means for machine learning, can be used to calculate a proportion of each value in a set of values. Thus, based on the calculated proportion, a degree of similarity of the respective words in the speech data can be calculated, and through filtering, words to be displayed on the screen can be obtained, thereby replacing the English language of the to-be-recognized speech data displayed on the screen.

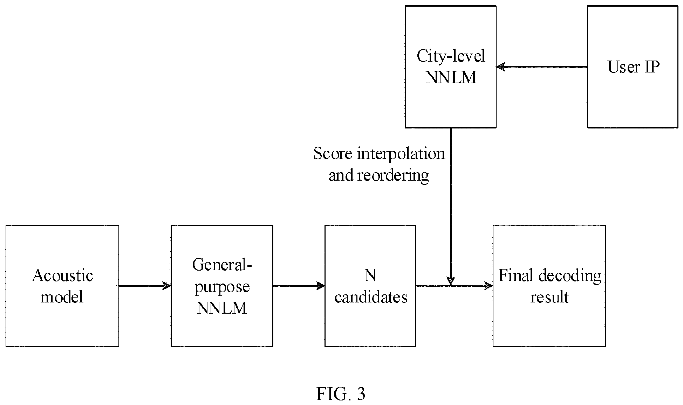

For an implementation of the language model, in the related art, as illustrated in FIG. 3, a resource may refer to an additional Ngram model (an algorithm based on a statistical language model) trained by place names. A general-purpose neural network model such as a Neural Network Language Model (NNLM) may be obtained by training based on texts relevant to place names of Points of Interest (POIs) of an entire country corresponding to the recognized language. In contrast to the general-purpose NNLM, a city-level model is mainly obtained based on a small amount of POI data trained with texts of place names of a corresponding city, and it is small for computational and storage reasons.

In the language model illustrated in FIG. 3, the speech request of the user is processed based on an acoustic model, and decoded based on a general-purpose large-size neural network model NNLM to obtain N candidate words. Resource information, e.g., place name information relevant to the user's IP address introduced based on a small-size city-level NNLM, is introduced for the score interpolation reordering to obtain a final decoding result with user features, thereby achieving speech recognition of the user.

However, in this manner, the speech request may come from a user from any region, such as the global, the Asian region, or the European region. In some regions with small areas but many countries and high mobility, the user may often need to have a cross-country trip or go to the capital city. In this case, when only city resources corresponding to the user's IP address are loaded, an activation strength is not strong enough. In addition, the resource information is introduced after obtaining the candidate words through decoding, and thus the introduced resource information is not really involved in the decoding thereby avoiding a problem of inaccurate speech recognition, which is caused by a failure of obtaining an inactivation due to the absence of the correct answer in the candidate words.

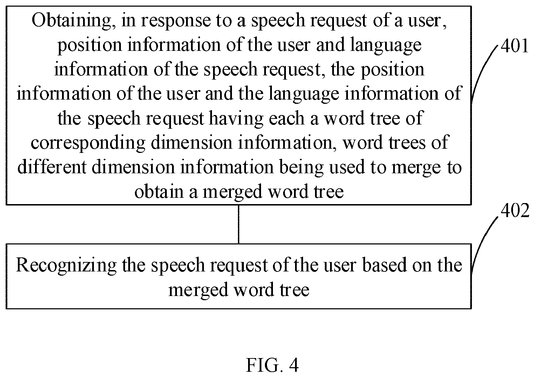

FIG. 4 illustrates a flowchart of a speech recognition method provided by the present disclosure. Specifically, referring to FIG. 4, the speech recognition method may include actions at blocks 401 and 402.

At 401, in response to a speech request of a user, position information of the user and language information of the speech request are obtained. The position information of the user and the language information of the speech request have each a word tree of a corresponding dimension of information. Word trees of different dimensions of information are used to merge into a merged word tree.

In the present disclosure, during recognizing the speech request of the user, resources may be introduced to construct a language model. The speech request is recognized based on the merged word tree used in the language model.

The introduced resources may be relevant resource information obtained based on each piece of different dimensions of information, including item information corresponding to each piece of different dimensions of information. The dimensions of information may include the position information of the user, and/or the language information of the speech request, and/or authorization information of the user. The position information of the user may be determined based on IP address information of the user. The relevant resource information obtained based on the IP address information of the user may be, for example, resources of a city where the corresponding IP address is located. The item information of the relevant resource information obtained based on the user's IP address information may be place name items of the city. The language information of the speech request may be determined based on language identification (ID) information, and specifically, based on the multilingual acoustic model as illustrated in FIG. 2. The relevant resource information obtained based on the language ID information may be, for example, popular place name resources of the capital/popular big cities of a country corresponding to the user's language ID. The item information of the relevant resource information obtained based on the language ID information may be popular place name items of the country or city corresponding to the language. The relevant resource information obtained based on the authorization information of the user may include place name information, information of collected songs, contact persons, or the like, which is commonly used by the user.

The resource information of different dimensions may be introduced by constructing a word tree, such that the resources introduced in the form of word tree can participate in a speech decoding process by means of the general-purpose neural network model, thereby avoiding a problem of inaccurate speech recognition, which is caused by a failure of obtaining an inactivation due to the absence of the correct answer in the candidate words. In addition, by merging of the word trees relevant to the different dimensions of information, the accuracy of a speech recognition for the user can be increased and thus the user experience can be improved.

In this case, the item information corresponding to each piece of different dimensions of information may be obtained separately. A plurality of different pieces of item information may be merged to generate a word tree for each dimension of information.

Specifically, word vectors in respective pieces of item information corresponding to a target dimension of information are obtained sequentially. In accordance with a sequence of the word vectors in the respective pieces of item information, and based on a merging manner of identical word vectors, word nodes of a word tree corresponding to the target dimension of information are constructed.

The word nodes of the word tree corresponding to the target dimension of information include a root node. In this case, the root node of the word tree may be constructed based on the merging manner of the identical word vectors, which may specifically include: obtaining, for the respective pieces of item information, first word vectors located at beginnings of sentences; and determining, in response to an absence of identical first word vectors, the first word vectors located at the beginnings of the sentences as independent root nodes of the word tree corresponding to the target dimension of information, and/or merging, in response to a presence of identical first word vectors, the identical first word vectors as one root node in the word tree corresponding to the target dimension of information.

Leaf nodes of the word tree may be constructed based on a principle of merging identical prefix word vectors, which may specifically include: obtaining, for the respective pieces of item information, second word vectors following the beginnings of the sentences sequentially; and merging, in response to a presence of identical second word vectors having identical prefix word vectors in front of the identical second word vectors, the identical second word vectors having the identical prefix word vectors as one leaf node in the word tree corresponding to the target dimension of information, and/or constructing, in response to the presence of the identical second word vectors having different prefix word vectors in front of the identical second word vectors, the identical second word vectors having the different prefix word vectors as independent leaf nodes in the word tree corresponding to the target dimension of information, and/or constructing, in response to an absence of identical second word vectors, the second word vectors as independent leaf nodes in the word tree corresponding to the target dimension of information.

As an example, for constructing the word tree corresponding to the position information of the user, the form of word tree for the resource information of the IP address information of the user may be generated offline. The introduced resources for the IP address information of the user may be resource information for respective cities in a certain region, rather than a city-level NNLM corresponding to the IP address of the user. Therefore, the word tree (i.e., a first word tree) generated offline for the IP address information of the user may include a word tree generated by merging of different IP address information of the user. It should be noted that the word tree generated based on the item information of the position information of the user is not limited to the score interpolation reordering of the candidate words obtained after decoding, but it may be a vector word tree capable of participating in a decoding process.

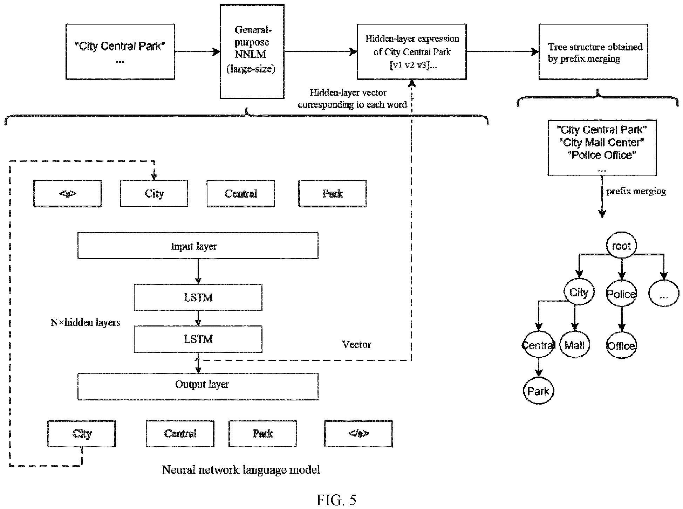

As illustrated in FIG. 5, the relevant resource information obtained based on the IP address information of the user may be, for example, resources of the city where the corresponding IP address is located. The item information of the relevant resource information obtained based on the IP address information of the user may be place name items of each city. Assuming that place name items of each European city are obtained, such as "City Central Park", "City Mall Center", "Police Office", etc., an input word vector of an encoded softmax layer for each item may be obtained using a neural network language model. The neural network language model may be constructed based on an input layer, N LSTM hidden layers, and an output layer. The encoded softmax layer may be the output layer. The input word vector of the softmax layer may refer to an output result obtained through the N hidden layers. The number of word vectors obtained for a certain item may be determined based on the number of words making up the item. For example, an item "City Central Park" consists of three words, and thus the number of word vectors obtained for this item is three. In this case, a first word vector at the beginning of a sentence for each place name item may be used as a root node, and a second word vector following the beginning of the sentence in each place name item may be used as a leaf node. Prefix merging is performed on words in these items to significantly reduce a space occupied by a vector word tree that needs to be generated offline. As an example, for two place name items having the identical first word vectors at beginnings of sentences, for example, "City Central Park" and "City Mall Center", the originally existing identical root nodes "City" can be merged as one root node in a generated word tree. For the place name item "Police Office", a first word vector "Police" at the beginning of the sentence is different from those of other place name items, and thus, the first word vector "Police" exists as an independent root node in the word tree. As another example, during construction of root nodes of two place name items, i.e., "City Central Park" and "City Central Square", the identical first word vectors "City" located at the beginnings of the sentences in the first word tree may be merged and constructed as one root node; and during a node construction of second word vectors "Central" following the beginnings of the sentences in accordance with a sequence of the word vectors in respective pieces of item information, the second word vectors "Central" may be merged and constructed as one leaf node in the word tree due to the fact that the currently obtained second word vectors "Central" are the same and the prefix word vectors "City" in front of the currently obtained second word vectors "Central" are the same. During another time of construction of corresponding nodes, in the word tree, of second word vectors following the beginnings of the sentences, independent leaf nodes for "Park" and "Square" may be constructed under a root node "City"-leaf node "Central" separately since the second word vectors "Park" and "Square" obtained from the place name items in this example are different from each other. In the word tree, node construction for identical second word vectors having different prefix word vectors may be derived in a similar way as described above, and corresponding examples thereof will be omitted here. In a word tree generated based on item information of the position information of the user, each place name item may be represented in a complete path from the root node to the word nodes. For example, a complete path of root node "City" to leaf node "Central" to leaf node "Park" illustrated in FIG. 5 may represent the place name item "City Central Park".

In the constructed word tree, each word node has corresponding hidden-layer vector expression information. The hidden-layer vector expression information may be expressed as "wordid + corresponding hidden-layer vector expression", where wordid may be a word represented by this word node, and the corresponding hidden-layer vector expression may refer to a code corresponding to a history path, in the vector word tree, of the node for this word, e.g., [v1 v2 v3]. For example, each place name item is encoded by the NNLM from a sentence-beginning character of each place name item. As an example, for two items "<s> city central park" and "<s> city mall", corresponding history paths for the word node "city" in these two items are both encoded as "<s> city". In this case, the word vectors having identical prefixes (i.e., identical history paths) may be merged in a word tree. For two items "<s> city central park" and "<s> outside of city mall", the word nodes "city" are identical wordids, but different word vectors are obtained for the word nodes "city" in encoding by the NNLM from the sentence-beginning character, that is, the history paths for the word nodes "city" are encoded as "<s> outside of city" and "<s> city". In this case, the vectors cannot be merged into a word tree.

It should be noted that a word tree constructed based on item information obtained from the language information and a word tree constructed based on item information obtained from the authorization information may also be generated offline. For details thereof, reference may be made to the generation process of the word tree constructed based on the item information of the position information of the user. The only difference is in the item information used to generate the word trees. Similarly, the root and leaf nodes of the word trees may also be constructed based on a principle of merging identical word vectors during a generation the word tree. In addition, each place name item may also be represented based on a complete path from the root node to the word nodes in the word tree, and each word node in the generated word trees may also include corresponding hidden-layer vector expression information. Details of the difference and the similarities may not be elaborated.

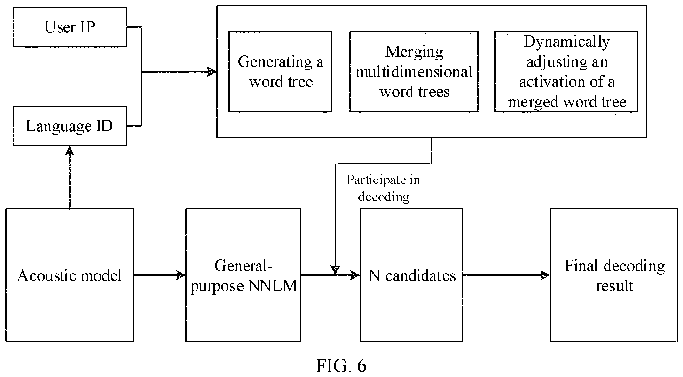

In the present disclosure, by merging the word trees, the introduced information of different dimensions can be merged. As illustrated in FIG. 6, a multi-dimensional vector word tree merging may be performed on the vector word trees generated by items, which are obtained based on the IP address information of the user and the language ID information in the previous action, thereby increasing a recognition rate in a process of recognizing the speech request of the user and improving the user experience.

The word trees to be merged may include a first word tree obtained based on the position information of the user, a second word tree obtained based on the language information of the speech request, and a fourth word tree obtained based on the authorization information of the user. The first word tree is mainly generated offline based on the item information corresponding to the position information of the user. The second word tree may be generated offline based on the item information corresponding to the language information. The fourth word tree may be mainly generated based on the item information of the authorization information of the user.

The merged word tree may include a third word tree, a fourth word tree, and a fifth word tree.

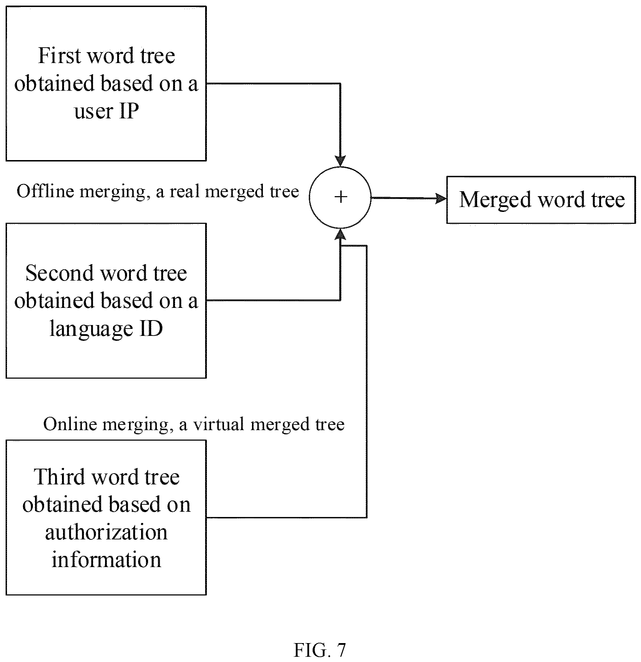

Specifically, during the multi-dimensional vector word tree merging, in an example as illustrated in FIG. 7, the first word tree obtained based on the position information of the user may be determined as basis dimension of information, and the second word tree obtained based on the language information of the speech request may be determined as additional dimension of information. The first word tree and the second word tree may be merged offline to obtain the merged third word tree.

The word tree obtained by offline merging may be a truly merged word tree, and no splitting operation may be performed during processing the word tree. The root nodes may be merged by: obtaining word vectors located at root nodes in the first word tree and the second word tree sequentially, and merging, by merging identical word vectors, the word vectors located at the root nodes in the first word tree and the second word tree. The leaf nodes may be merged by: obtaining word vectors located at leaf nodes in the first word tree and the second word tree sequentially, and merging, by merging identical word vectors having identical prefix word vectors, the word vectors located at the leaf nodes in the first word tree and the second word tree. It should be noted that the merging of the identical word vectors and the merging of the identical prefix word vectors may be performed in the same manner as described in the above generation process of the word tree, which is not repeated herein.

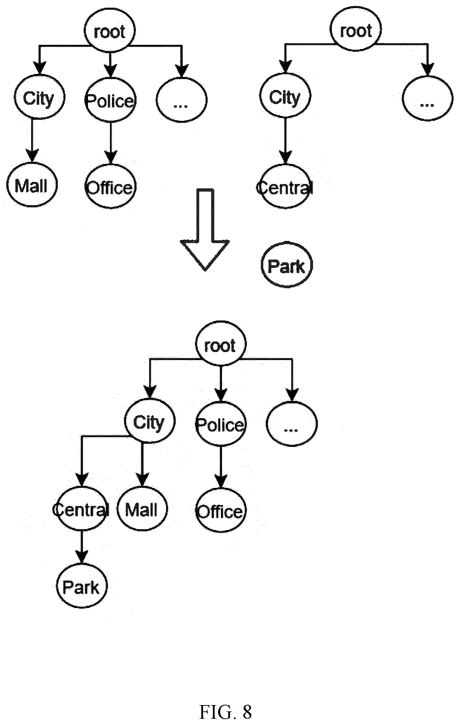

For example, compared with a conventional strategy of obtaining city information by positioning based on the IP address of the user, the present disclosure enables a word tree merging of the first word tree (e.g., the word tree on the top left in FIG. 8) of place name resources of the city where the IP address of the user is located and the second word tree (e.g., the word tree on the top right in FIG. 8) of the popular place name resources of the capital/popular big cities of the country corresponding to the language. The second word tree is loaded based on the language information of the user. Specifically, a new word vector tree (i.e., the third word tree) may be obtained by merging all legal paths starting from the root nodes. For example, node "root" in "root-City-Mall" in the first word tree and node "root" in "root-City-Park" in the second word tree are merged as one node; and node "City" in "root-City-Mall" in the first word tree and node "City" in "root-City-Park" in the second word tree are merged as one node. For a path "root-Police-Office" in the first word tree, in the merged third word tree, only the identical nodes "root" are merged, while the remaining nodes "Police" and "Office" are constructed to be independent nodes in the third word tree.

During the multi-dimensional vector word tree merging, in another example as illustrated in FIG. 7, when the first word tree obtained based on the IP address information of the user is used as the basis dimension of information, the second word tree obtained based on the language ID information and the fourth word tree obtained based on the authorization information may be together used as the additional dimension of information, or the fourth word tree obtained based on the authorization information may be used as the additional dimension of information alone. The word trees of different dimensions may be merged. Specifically, the fourth word tree and the third word tree may be merged online to generate a fifth word tree, or the first word tree and the fourth word tree may be merged online to generate a sixth word tree. In this way, the speech request of the user can be recognized by means of the merged fifth word tree or the merged sixth word tree.

There are few items for the relevant resource information based on the authorization information. In this case, the authorization information may be uploaded in real time through a stand-alone process, and the fourth word tree for the authorization information may be generated in real time. A word tree merging process for the fourth word tree may be achieved based on online dynamic merging. The online merging is pluggable merging, and may be used in a plug-and-play manner almost without any budget delay. The plug-and-play manner of the fourth word tree may be achieved in such a manner that, after receiving the uploaded authorization information, the fourth word tree generated online is merged with other word trees; and when failing to receive the authorization information uploaded in real time in the stand-alone process, the fourth word tree is not subjected to a merging. The fifth or sixth word tree obtained through the merging is a virtual synthetic word tree.

The online merging of word trees is different from the offline merging of word trees in that, the online merging of word trees belongs to merging of virtual word trees. That is, on a basis of an original root node of depth 0, a new virtual root node of depth -1 that does not represent any meaning is added, and the identical word nodes are no longer merged in a process of merging word trees. Since the number of nodes in the word tree for the authorization information is smaller than that in a city-level word tree, it is unnecessary to save space by merging nodes.

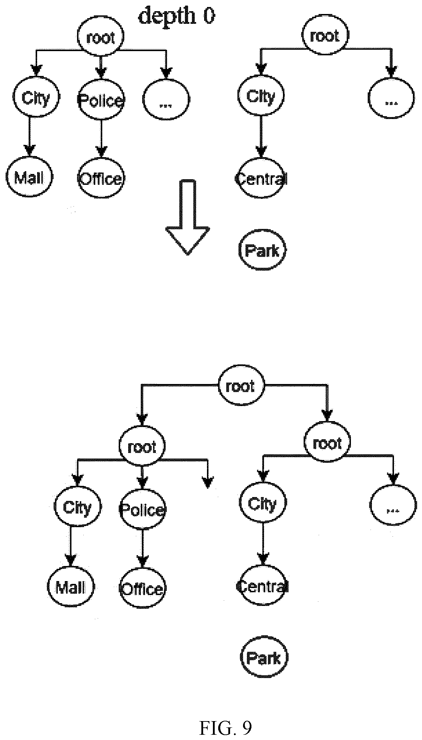

As an example, for performing the online merging, the first word tree (e.g., the word tree on the top left of FIG. 9) obtained based on the IP address information of the user is adopted as the basis dimension of information, and the fourth word tree (e.g., the word tree on the top right of FIG. 9) obtained based on the authorization information is adopted as the additional dimension of information alone. In a process of merging the first word tree and the fourth word tree to generate the sixth word tree, a new virtual root node "root" may be first added to the generated sixth word tree, and following the new virtual root node "root", the first word tree and the fourth word tree can be introduced respectively. The new virtual root node "root" is not merged with the root nodes "root", which respectively exist in the first word tree and the fourth word tree. Thereby, the identical word nodes in the word trees are not merged during subsequent merging. As another example, for performing the merging, the first word tree obtained based on the IP address information of the user is adopted as the basis dimension of information, and both the second word tree obtained based on the language ID information and the fourth word tree obtained based on the authorization information are adopted as the additional dimension of information. The first word tree and the second word tree may be merged offline, to obtain an intermediate word tree, i.e., the third word tree, which may be the word tree as illustrated on the top left of FIG. 9. For example, by online-merging the intermediate word tree and the fourth word tree (e.g., the word tree on the top right of FIG. 9), as described above, the fifth word tree can be obtained.

At 402, the speech request of the user is recognized based on the merged word tree.

The process of recognizing the speech request of the user may be a decoding process of the speech request of the user based on the introduced resource information.

In the present disclosure, an activation of the speech request of the user in the merged word tree is dynamically adjusted based on the merged word tree, and the speech request of the user is recognized based on the activation.

Specifically, the introduced resources are allowed to participate in the decoding process of speech in the form of word tree. For example, as illustrated in FIG. 6, by means of the merged word tree obtained based on the introduced resource information, an activation of a word node or word nodes in the word tree can directly participate in the decoding process by dynamically adjusting an LM-score activation. The activation can increase a softmax score for a word or words in the decoding process, thereby helping the general-purpose neural network language model recognizes words having high softmax scores to obtain N candidate words. In this way, a final decoding result can be obtained, and the accuracy of word recognition for the speech can be improved. The softmax score may represent a probability of a word presenting in the general-purpose neural network language model.

In a process of dynamically adjusting the activation, a degree of similarity between the speech request of the user and each word node in the merged word tree may be determined, and based on the merged word tree and the degree of similarity, an activation of each word node can be adjusted. The merged word tree may include the third word tree, the fourth word tree, and the fifth word tree, as described above. The present disclosure is not limited in this regard.

Each word node in the merged word tree has corresponding hidden-layer vector expression information. The degree of similarity may be determined based on similarity between the speech request of the user and each word node in the merged word tree. That is, a higher value of similarity indicates a higher degree of similarity and correspondingly, a higher probability that the word node may receive an activation. Specifically, in the decoding process, cosine similarity of the word vector corresponding to each word node in the merged word tree is calculated from the root node. The merged word tree has the hidden-layer vector expression information corresponding to each word node. That is, each word node has a history path code corresponding to a path where the word node is located. During similarity calculation, a corresponding word node in the merged word tree may be determined for each word in the speech request of the user, and the hidden-layer vector expression information of the word node may be obtained. The hidden-layer vector expression information of the corresponding word node may be compared with the hidden-layer vector expression information of the respective word nodes located at a next layer of this word node in the merged word tree, to obtain similarity between each word of the speech request and the words in the merged word tree, thereby determining the degree of similarity.

A process of adjusting, based on the merged word tree and the degree of similarity, the activation of each word node may mainly include: dynamically adjusting an activation strength of the LM-score based on the merged word tree; actually participating in decoding of each word; and adjusting, from a root node of the merged word tree, an activation of a word node at a next layer based on an activation result determined for a degree of similarity of a word node at an immediately previous layer. Different activation processing policies may be specified depending on depths of the word tree. That is, different layers may be set with different activation multipliers, which is not limited in the present disclosure.

The action of adjusting the activation of the word node at the next layer based on the activation result of the word node at the immediately previous layer may be an adjustment when the current layer is in an active state or an adjustment when the current layer is in an inactive state.

When the current layer is in the active state, the action may specifically include: in response to the degree of similarity of the word node at the immediately previous layer satisfying an activation condition of a current layer where the immediately previous layer is located, adjusting, by using an activation multiplier of the current layer, an activation of the word node at the immediately previous layer, and determining an activation result of the word node at the immediately previous layer to be that the current layer is in an active state. In this case, activating the word node at the next layer may include: determining a degree of similarity of a next word node using hidden-layer vector expression information of the word node at the next layer in an active state, and adjusting the activation of the word node at the next layer based on a degree of similarity of the word node at the next layer and an activation condition of the next layer.

In practice, the activation may be achieved by adjusting an activation score or an activation grade, etc. In this example, the activation score is used, and the degree of similarity between the speech and each word node can be determined based on calculation of the similarity. When the calculated similarity of the word node at the immediately previous layer exceeds an activation threshold of the current layer, it indicates that the degree of similarity of the word node at the immediately previous layer satisfies the activation condition of the current layer. In this case, a probability score (i.e., softmax score) of the word node and the activation multiplier of the current layer may be obtained. An activation of this word node may be adjusted to a value obtained through multiplying its probability score by the activation multiplier of the current layer. When activating the word node at the next layer, a similarity of the next word node may be determined based on the hidden-layer vector expression information of the word node at the next layer in the active state, and an activation score of the word node at the next layer is determined based on an activation adjustment manner of the word node at the immediately previous layer, i.e., after performing threshold determination between the similarity of the next word node and the activation condition of the next layer.

When the current layer is in the inactive state, the action may specifically include: in response to the degree of similarity of the word node at the immediately previous layer failing to satisfy an activation condition of a current layer, determining an activation result of the word node at the immediately previous layer to be that a current layer is in an inactive state; and determining a degree of similarity of the word node at the next layer using hidden-layer vector expression information of a word node at the current layer in the inactive state, and adjusting the activation of the word node at the next layer based on the degree of similarity of the word node at the next layer and an activation condition of the next layer.

In practice, the activation may be achieved by adjusting the activation score or the activation grade, etc. In this example, the activation score is used. The degree of similarity between the speech and each word node may be determined based on the calculation of the similarity. When the calculated similarity of the word node at the immediately previous layer does not reach the activation threshold of the current layer, it indicates that the degree of similarity of the word node at the immediately previous layer fails to satisfy the activation condition of the current layer. In this case, no activation adjustment is made for this node. That is, the activation score of this word node remains the same as the original probability score for this word node. Therefore, when an activation processing is performed on the word node at the next layer, if the current layer is in the inactive state, the hidden-layer vector expression information of the next word node may be compared with the hidden-layer vector expression information of the word node at the current layer again to obtain the similarity between the next word node and the word node at the current layer. Therefore, an activation score of the next word node may be determined after performing threshold determination on the similarity between the next word node and the word node at the current layer.

For example, the dynamic adjustment of the activation may be performed in a manner as illustrated in FIG. 9. If the to-be-recognized speech is "<s> Go To City Central Park </s>", the word tree used for recognition is that illustrated in FIG. 5, and a speech decoding process on the speech request may be implemented based on the general-purpose NNLM.

An example is described below. (1) When a word node <s> is fed to the NNLM, based on an activation result of the word node <s>, an activation of a next word node "Go" is predicted, and a similarity calculation can be performed on the hidden-layer vector expression information of the word node <s> at an immediately previous layer and the hidden-layer vector expression information of respective word nodes at a first layer of the third word tree. That is, codes of history paths in the word tree, corresponding to these two word nodes are compared. When a similarity between the hidden-layer vector expression information of the word node <s> at the immediately previous layer and a word node goes beyond an activation threshold of a current layer, the first layer of the word tree may be turned active. A softmax score of wordid corresponding to this word node in the word node is multiplied by an activation multiplier of the first layer to obtain an activation score. In this case, it may be assumed that "Go" fails to activate the first layer of the word tree, i.e., the matching fails, and accordingly, the activation of the word node "Go" is not adjusted. (2) Therefore, the word node "Go" may continue to be fed to the NNLM to predict an activation of a next word node "To". Since "Go" fails to activate the first layer of the word tree, the hidden-layer vector expression information of "Go" may continue to be matched with the hidden-layer vector expression information of each word node in the first layer of the word tree. If a matching of the current word node "To" fails, the first layer of the word tree still fails to be activated. (3) The word node "To" continues to be fed to the NNLM to predict an activation of a next word node "City". In this case, if a similarity between a hidden-layer vector of "To" and "City" at the first layer of the word tree is 0.9, which is greater than an activation threshold 0.8 of the first layer, an activation condition of the first layer is satisfied, and thus the matching succeeds. A softmax score corresponding to the word node "City" may be multiplied by an activation multiplier 1.2 to obtain an activation score of the word node "City". The first layer may be recorded as being in the active state. (4) The word node "City" continues to be fed to the NNLM to predict an activation of a next word node "Central". A similarity calculation may be performed between the hidden-layer vector expression information corresponding to "City" and the hidden-layer vector expression information of a word node, hanging below the word node "City", at a second layer of the word tree. Since the first layer is in the active state, a word tree path "City" -> "Central" is successfully activated. If a similarity of "Central" is 0.8, which is greater than an activation threshold 0.6 of the current layer, the matching succeeds. In this case, a softmax score of "Central" may be multiplied by an activation multiplier 2 of the second layer. If the softmax score of "Center" in the NNLM is 0.5 and an activation score of "Central" is only 0.3, the NNLM may recognize the words with a higher score (i.e., a more similar word) when decoding this sentence. Consequently, the sentence may be recognized as an incorrect statement "City Center". Through the activation processing by the above activation multiplier, the activation score of "Central" may be adjusted to 0.6. In this way, the activation score of "Central" exceeds the activation score of "Center", allowing the word "Central" in the speech to be correctly recognized, thereby improving the accuracy of word recognition.

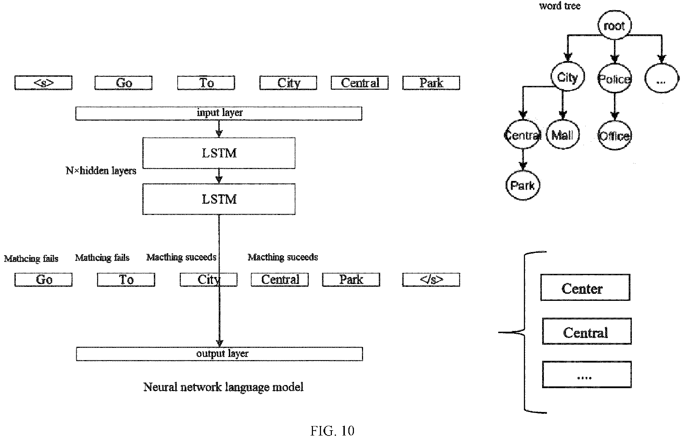

It should be noted that different activation processing policies may be specified based on different depths of the word tree. That is, different activation multipliers may be set for different layers. As illustrated in FIG. 10, a policy of dynamically adjusting an activation based on the depth of the word tree may be based on such a principle that a long-word similarity is more credible, indicating that a word located more posterior may have a higher similarity. That is, a word is more likely to have a similar word in the word tree with an increase in the depth of the word tree. In this case, the activation thresholds for the respective layers may be set to gradually decrease from the root node, such that the word at the greater depth of the word tree is more likely to be activated. Similarly, based on the principle that the long-word similarity is more credible, the activation strengths of the respective layers may be set to gradually increase from the root node. In this way, the longer a word spoken by the user, the more likely it is to be a word in the word tree. That is, the word at the greater depth of the word tree requires an increased activation multiplier for the layer.

In the present disclosure, the position information of the user and the language information of the speech request are obtained in response to the speech request of the user. The position information of the user and the language information of the speech request have each the word tree of the corresponding dimension of information. The word trees of different dimensions of information are used to merge into the merged word tree. In this case, the speech request of the user may be recognized based on the merged word tree. With the word tree-based approach, the user-related position information and language are integrated and introduced to recognize the speech request of the user. Therefore, the resource information introduced in the form of word tree can participate in the decoding process of the speech request, thereby avoiding a problem of inaccurate speech recognition. In addition, by merging of the word trees relevant to the different dimensions of information, the accuracy of the speech recognition for the user can be increased, and thus the user experience can be improved.

It should be noted that, in order to simplify description of the present disclosure, the method of the present disclosure is expressed as a series of action combinations, but it would be appreciated by those skilled in the art that the present disclosure is not limited to the order of the actions, as some steps may be executed in other orders or be executed at the same time according to the present disclosure. In addition, it would be further appreciated by those skilled in the art that embodiments described in the specification are preferred embodiments, and actions involved therein may not be necessary for the present disclosure.

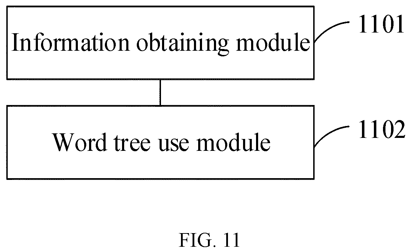

FIG. 11 illustrates a structural block diagram of a speech recognition apparatus provided by the present disclosure. Specifically, referring to FIG. 11, the speech recognition apparatus may include an information obtaining module 1101 and a word tree use module 1102.

The information obtaining module 1101 is configured to obtain, in response to a speech request of a user, position information of the user and language information of the speech request. The position information of the user and the language information of the speech request have each a word tree of a corresponding dimension of information. Word trees of different dimensions of information are used to merge into a merged word tree.

The word tree use module 1102 is configured to recognize the speech request of the user based on the merged word tree.

In the speech recognition apparatus, the word tree use module 1102 is specifically configured to: dynamically adjust, based on the merged word tree, an activation of the speech request of the user in the merged word tree, and recognize the speech request of the user based on the activation. The word tree use module is specifically configured to, during adjusting the activation: determine a degree of similarity between the speech request of the user and each word node in the merged word tree; and adjust, based on the merged word tree and the degree of similarity, an activation of each word node. The merged word tree includes a third word tree, a fourth word tree, and a fifth word tree.

The speech recognition apparatus can further include a word tree generation module. The word tree generation module is configured to: obtain item information corresponding to each piece of different dimensions of information, and merge a plurality of different pieces of item information to generate a word tree for each dimension of information. The dimensions of information include the position information of the user, and/or the language information of the speech request, and/or authorization information of the user.

The speech recognition apparatus can further include a word tree merging module. The word tree merging module is configured to: offline-merge a first word tree obtained based on the position information of the user and a second word tree obtained based on the language information of the speech request to obtain the merged third word tree; and further configured to obtain authorization information of the user, obtain the fourth word tree based on the authorization information, and online-merge the fourth word tree and the third word tree to obtain the merged fifth word tree; and/or online-merge the fourth word tree and the first word tree to obtain a merged sixth word tree.

The apparatus is basically similar to the method, and is therefore described briefly. For related description, reference may be made to a corresponding part of the description of the method.

The present disclosure further provides a vehicle-mounted terminal. The vehicle-mounted terminal includes the above-mentioned speech recognition apparatus, a processor, a memory, and a computer program stored on the memory and executable on the processor. The computer program, when executed by the processor, implements the steps of the above-mentioned speech recognition method, and can achieve same technical effects. Details thereof will be omitted here to avoid repetition.

The present disclosure further provides a computer-readable storage medium. The computer-readable storage medium stores a computer program. The computer program, when executed by a processor, implements the steps of the above-mentioned speech recognition method, and can achieve same technical effects. Details thereof will be omitted here to avoid repetition.

The respective examples in the specification are described in a progressive manner. Each example focuses on differences from other examples. The same or similar parts of various examples can be referred to each other.

Those skilled in the art should understand that the examples of the present disclosure can be provided as a method, an apparatus, or a computer program product. Therefore, the examples of the present disclosure may adopt a form of a complete hardware, a complete software, or a combination of software and hardware. In addition, the examples of the present disclosure may adopt a form of a computer program product implemented on one or more computer-usable storage media (including but not limited to disk storage, Compact Disc Read-Only Memory (CD-ROM), optical storage, etc.) having computer-usable program codes.

The examples of the present disclosure are described with reference to flowcharts and/or block diagrams of the method, the terminal device (system), and the computer program product according to the examples of the present disclosure. It should be understood that, each process and/or block in the flowcharts and/or block diagrams, and a combination of processes and/or blocks in the flowcharts and/or block diagrams can be realized by computer program instructions. These computer program instructions can be provided to a processor of a general-purpose computer, a special-purpose computer, an embedded processor, or other programmable data processing terminal device to generate a machine, such that instructions executed by the processor of the computer or other programmable data processing terminal devices generate an apparatus for implementing functions specified in one or more processes in the flowchart and/or one or more blocks in the block diagram.

These computer program instructions can also be stored in a computer-readable memory that can guide a computer or other programmable data processing terminal devices to work in a specific manner, such that instructions stored in the computer-readable memory produce an article of manufacture including an instruction device. The instruction device implements functions specified in one or more processes in the flowchart and/or one or more blocks in the block diagram.

These computer program instructions can also be loaded on a computer or other programmable data processing terminal devices to enable a series of operation steps to be executed on the computer or other programmable terminal devices for producing computer-implemented processing, such that instructions executed on the computer or other programmable terminal devices provide steps for implementing functions specified in one or more processes in the flowchart and/or one or more blocks in the block diagram.

Although the preferred examples of the present disclosure have been described, those skilled in the art can make additional changes and modifications to these examples once they learn the basic creative concept.

Further, it should be noted that relational terms herein, such as "first" and "second", are used only for differentiating one entity or operation from another entity or operation, which do not necessarily require or imply any real relationship or sequence between the entities or operations. In addition, terms "comprise", "include" or any other variations thereof are meant to cover non-exclusive including, such that the process, method, article, or terminal device including a series of elements do not only include those elements, but also include other elements that are not explicitly listed, or also include inherent elements of the process, method, article, or terminal device. In a case that there are no more restrictions, an element qualified by the statement "comprises a ..." does not exclude the presence of additional identical elements in the process, method, article, or terminal device that includes the said element.

The speech recognition method and apparatus, the terminal, and the storage medium provided by the present disclosure are described in detail above. Specific examples are used herein to illustrate the principles and implementations of the present disclosure.

## Claims

1. A speech recognition method, comprising:
obtaining (401), in response to a speech request of a user, different dimensions of information regarding the speech request of the user, the different dimensions of information comprising position information of the user and language information of the speech request, the language information of the speech request being determined based on a language identification, wherein the position information of the user and the language information of the speech request have each a word tree of a corresponding dimension of information, word trees of the different dimensions of information being used to merge into a merged word tree; and
recognizing (402) the speech request of the user based on the merged word tree.

2. The method according to claim 1, wherein said recognizing the speech request of the user based on the merged word tree comprises:
dynamically adjusting, based on the merged word tree, an activation of the speech request of the user in the merged word tree; and
recognizing the speech request of the user based on the activation.

3. The method according to claim 1 or 2, wherein the merged word tree comprises a third word tree, a fourth word tree, and a fifth word tree; and
wherein the method further comprises:
offline-merging a first word tree obtained based on the position information of the user and a second word tree obtained based on the language information of the speech request to obtain the merged third word tree; or
obtaining authorization information of the user, obtaining the fourth word tree based on the authorization information, and online-merging the fourth word tree and the third word tree to obtain the merged fifth word tree; or
online-merging the fourth word tree and the first word tree to obtain a merged sixth word tree.

4. The method according to claim 3, wherein said offline-merging the first word tree obtained based on the position information of the user and the second word tree obtained based on the language information of the speech request to obtain the merged third word tree comprises:
obtaining word vectors located at root nodes in the first word tree and the second word tree sequentially, and merging, by merging identical word vectors, the word vectors located at the root nodes in the first word tree and the second word tree; and
obtaining word vectors located at leaf nodes in the first word tree and the second word tree sequentially, and merging, by merging identical word vectors having identical prefix word vectors, the word vectors located at the leaf nodes in the first word tree and the second word tree.

5. The method according to claim 2, wherein said dynamically adjusting, based on the merged word tree, the activation of the speech request of the user in the merged word tree comprises:
determining a degree of similarity between the speech request of the user and each word node in the merged word tree; and
adjusting, based on the merged word tree and the degree of similarity, an activation of each word node, wherein the merged word tree comprises a third word tree, a fourth word tree, and a fifth word tree.

6. The method according to claim 5, wherein each word node in the merged word tree has corresponding hidden-layer vector expression information, and wherein said determining the degree of similarity between the speech request of the user and each word node in the merged word tree comprises:
determining, for each word in the speech request of the user, a corresponding word node in the merged word tree, and obtaining the hidden-layer vector expression information of the corresponding word node; and
comparing the hidden-layer vector expression information of the corresponding word node with the hidden-layer vector expression information of each word node in the merged word tree located at a next layer of the corresponding word node, to obtain a degree of similarity of each word of the speech request of the user in the merged word tree.

7. The method according to claim 5 or 6, wherein said adjusting, based on the merged word tree and the degree of similarity, the activation of each word node comprises:
adjusting, from a root node of the merged word tree, an activation of a word node at a next layer based on an activation result determined for a degree of similarity of a word node at an immediately previous layer of the next layer.

8. The method according to claim 7, wherein said adjusting the activation of the word node at the next layer based on the activation result determined for the degree of similarity of the word node at the immediately previous layer of the next layer comprises:
in response to the degree of similarity of the word node at the immediately previous layer satisfying an activation condition of a current layer where the immediately previous layer is located, adjusting, by using an activation multiplier of the current layer, an activation of the word node at the immediately previous layer, and determining an activation result of the word node at the immediately previous layer to be that the current layer is in an active state; and
determining a degree of similarity of a next word node based on the hidden-layer vector expression information of the word node at the next layer in an active state, and adjusting the activation of the word node at the next layer based on a degree of similarity of the word node at the next layer and an activation condition of the next layer.

9. The method according to claim 7 or 8, wherein said adjusting the activation of the word node at the next layer based on the activation result determined for the degree of similarity of the word node at the immediately previous layer comprises:
in response to the degree of similarity of the word node at the immediately previous layer failing to satisfy an activation condition of a current layer where the immediately previous layer is located, determining an activation result of the word node at the immediately previous layer to be that the current layer is in an inactive state; and
determining a degree of similarity of the word node at the next layer based on the hidden-layer vector expression information of a word node at the current layer in the inactive state, and adjusting the activation of the word node at the next layer based on the degree of similarity of the word node at the next layer and an activation condition of the next layer.

10. The method according to any one of claims 1 to 3, further comprising:
obtaining, for each of the different dimensions of information, a plurality of different pieces of item information corresponding to the dimension of information, and merging -a the plurality of different pieces of item information to generate a respective one of the word trees of the different dimensions of information, wherein optionally the different dimensions of information further comprise authorization information of the user.

11. The method according to claim 10, wherein said merging the plurality of different pieces of item information to generate the respective one of the word trees of the different dimensions of information comprises:
obtaining word vectors in respective pieces of item information corresponding to a target dimension of information sequentially, and constructing, by merging identical word vectors, word nodes of a word tree corresponding to the target dimension of information in accordance with a sequence of the word vectors in the respective pieces of item information.

12. The method according to claim 11, wherein the word nodes of the word tree corresponding to the target dimension of information comprise root nodes, and wherein said constructing, by merging the identical word vectors, the word nodes of the word tree corresponding to the target dimension of information comprises:
obtaining, for the respective pieces of item information, first word vectors located at beginnings of sentences; and
determining, in response to an absence of identical first word vectors, the first word vectors located at the beginnings of the sentences as independent root nodes of the word tree corresponding to the target dimension of information, and/or merging, in response to a presence of identical first word vectors, the identical first word vectors as one root node in the word tree corresponding to the target dimension of information.

13. The method according to claim 11 or 12, wherein the word nodes of the word tree corresponding to the target dimension of information comprises leaf nodes, and wherein said constructing, by merging the identical word vectors, the word nodes of the word tree corresponding to the target dimension of information comprises:
obtaining, for the respective pieces of item information, second word vectors following the beginnings of the sentences sequentially; and
merging, in response to a presence of identical second word vectors having identical prefix word vectors in front of the identical second word vectors, the identical second word vectors having the identical prefix word vectors as one leaf node in the word tree corresponding to the target dimension of information; and/or constructing, in response to the presence of the identical second word vectors having different prefix word vectors in front of the identical second word vectors, the identical second word vectors having the different prefix word vectors as independent leaf nodes in the word tree corresponding to the target dimension of information; and/or constructing, in response to an absence of identical second word vectors, the second word vectors as independent leaf nodes in the word tree corresponding to the target dimension of information.

14. A vehicle-mounted terminal, comprising:
a processor; and
a memory having a computer program stored thereon and executable on the processor;
wherein the computer program, when executed by the processor, implements the steps of the speech recognition method according to any one of claims 1 to 13.

15. A computer-readable storage medium, having a computer program stored thereon, wherein the computer program, when executed by a processor, implements the steps of the speech recognition method according to any one of claims 1 to 13.

## Patentansprüche

1. Spracherkennungsverfahren, aufweisend:
Erhalten (401), als Reaktion auf eine Sprachanforderung eines Benutzers, verschiedener Informationsdimensionen bezüglich der Sprachanforderung des Benutzers, wobei die verschiedenen Informationsdimensionen Positionsinformationen des Benutzers und Sprachinformationen der Sprachanforderung aufweisen, wobei die Sprachinformationen der Sprachanforderung auf der Grundlage einer Sprachidentifikation bestimmt werden, wobei die Positionsinformationen des Benutzers und die Sprachinformationen der Sprachanforderung jeweils einen Wortbaum einer entsprechenden Informationsdimension aufweisen, wobei Wortbäume der verschiedenen Informationsdimensionen verwendet werden, um zu einem zusammengesetzten Wortbaum zusammengeführt zu werden; und
Erkennen (402) der Sprachanforderung des Benutzers auf der Grundlage des zusammengesetzten Wortbaums.

2. Verfahren nach Anspruch 1, bei dem das Erkennen der Sprachanforderung des Benutzers auf der Grundlage des zusammengeführten Wortbaums aufweist:
dynamisches Anpassen, auf der Grundlage des zusammengesetzten Wortbaums, einer Aktivierung der Sprachanforderung des Benutzers in dem zusammengesetzten Wortbaum; und
Erkennen der Sprachanforderung des Benutzers auf der Grundlage der Aktivierung.

3. Verfahren nach Anspruch 1 oder 2, bei dem der zusammengesetzte Wortbaum einen dritten Wortbaum, einen vierten Wortbaum und einen fünften Wortbaum aufweist; und
wobei das Verfahren des Weiteren aufweist:
Offline-Zusammenführen eines ersten Wortbaums, der auf der Grundlage der Positionsinformation des Benutzers erhalten wurde, und eines zweiten Wortbaums, der auf der Grundlage der Sprachinformationen der Sprachanforderung erhalten wurde, um den zusammengesetzten dritten Wortbaum zu erhalten; oder
Erhalten von Autorisierungsinformationen des Benutzers, Erhalten des vierten Wortbaums auf der Grundlage der Autorisierungsinformationen und Online-Zusammenführen des vierten Wortbaums und des dritten Wortbaums, um den zusammengesetzten fünften Wortbaum zu erhalten; oder
Online-Zusammenführen des vierten Wortbaums und des ersten Wortbaums, um einen zusammengesetzten sechsten Wortbaum zu erhalten.

4. Verfahren nach Anspruch 3, bei dem das Offline-Zusammenführen des ersten Wortbaums, der auf der Grundlage der Positionsinformation des Benutzers erhalten wurde, und des zweiten Wortbaums, der auf der Grundlage der Sprachinformationen der Sprachanforderung erhalten wurde, um den zusammengesetzten dritten Wortbaum zu erhalten, aufweist:
sequentielles Erhalten von Wortvektoren, die sich an Wurzelknoten in dem ersten Wortbaum und dem zweiten Wortbaum befinden, und Zusammenführen der Wortvektoren, die sich an den Wurzelknoten in dem ersten Wortbaum und dem zweiten Wortbaum befinden, durch Zusammenführen identischer Wortvektoren; und
sequentielles Erhalten von Wortvektoren, die sich an Blattknoten in dem ersten Wortbaum und dem zweiten Wortbaum befinden, und Zusammenführen der Wortvektoren, die sich an den Blattknoten in dem ersten Wortbaum und dem zweiten Wortbaum befinden, durch Zusammenführen identischer Wortvektoren mit identischen Präfix-Wortvektoren.

5. Verfahren nach Anspruch 2, bei dem das dynamische Anpassen der Aktivierung der Sprachanforderung des Benutzers in dem zusammengesetzten Wortbaum auf der Grundlage des zusammengesetzten Wortbaums aufweist:
Bestimmen eines Ähnlichkeitsgrades zwischen der Sprachanforderung des Benutzers und jedem Wortknoten in dem zusammengesetzten Wortbaum; und
Anpassen einer Aktivierung jedes Wortknotens auf der Grundlage des zusammengesetzten Wortbaums und des Ähnlichkeitsgrads, wobei der zusammengesetzte Wortbaum einen dritten Wortbaum, einen vierten Wortbaum und einen fünften Wortbaum aufweist.

6. Verfahren nach Anspruch 5, bei dem jeder Wortknoten in dem zusammengesetzten Wortbaum entsprechende Hidden-Layer-Vektor-Ausdrucksinformationen aufweist, und bei dem das Bestimmen des Ähnlichkeitsgrades zwischen der Sprachanforderung des Benutzers und jedem Wortknoten in dem zusammengesetzten Wortbaum aufweist:
Bestimmen, für jedes Wort in der Sprachanforderung des Benutzers, eines entsprechenden Wortknotens in dem zusammengesetzten Wortbaum und Erhalten der Hidden-Layer-Vektor-Ausdrucksinformationen des entsprechenden Wortknotens; und
Vergleichen der Hidden-Layer-Vektor-Ausdrucksinformationen des entsprechenden Wortknotens mit der Hidden-Layer-Vektor-Ausdrucksinformationen jedes Wortknotens in dem zusammengesetzten Wortbaum, der sich auf einer nächsten Schicht des entsprechenden Wortknotens befindet, um einen Ähnlichkeitsgrad jedes Wortes der Sprachanforderung des Benutzers in dem zusammengesetzten Wortbaum zu erhalten.

7. Verfahren nach Anspruch 5 oder 6, bei dem das Anpassen der Aktivierung jedes Wortknotens auf der Grundlage des zusammengesetzten Wortbaums und des Ähnlichkeitsgrads aufweist:
Anpassen einer Aktivierung eines Wortknotens in einer nächsten Schicht auf der Grundlage eines Aktivierungsergebnisses, das für einen Ähnlichkeitsgrad eines Wortknotens in der unmittelbar vorhergehenden Schicht der nächsten Schicht bestimmt wurde, von einem Wurzelknoten des zusammengesetzten Wortbaums.

8. Verfahren nach Anspruch 7, bei dem das Anpassen der Aktivierung des Wortknotens in der nächsten Schicht auf der Grundlage des Aktivierungsergebnisses, das für den Ähnlichkeitsgrad des Wortknotens in der unmittelbar vorhergehenden Schicht der nächsten Schicht bestimmt wurde, aufweist:
als Reaktion darauf, dass der Ähnlichkeitsgrad des Wortknotens in der unmittelbar vorhergehenden Schicht eine Aktivierungsbedingung einer aktuellen Schicht erfüllt, in der sich die unmittelbar vorhergehende Schicht befindet, Anpassen einer Aktivierung des Wortknotens in der unmittelbar vorhergehenden Schicht unter Verwendung eines Aktivierungsmultiplikators der aktuellen Schicht und Bestimmen eines Aktivierungsergebnisses des Wortknotens in der unmittelbar vorhergehenden Schicht dahingehend, dass sich die aktuelle Schicht in einem aktiven Zustand befindet; und
Bestimmen eines Ähnlichkeitsgrades eines nächsten Wortknotens auf der Grundlage der Hidden-Layer-Vektor-Ausdrucksinformationen des Wortknotens in der nächsten Schicht in einem aktiven Zustand, und Anpassen der Aktivierung des Wortknotens in der nächsten Schicht auf der Grundlage eines Ähnlichkeitsgrades des Wortknotens in der nächsten Schicht und einer Aktivierungsbedingung der nächsten Schicht.

9. Verfahren nach Anspruch 7 oder 8, bei dem das Anpassen der Aktivierung des Wortknotens in der nächsten Schicht auf der Grundlage des Aktivierungsergebnisses, das für den Ähnlichkeitsgrad des Wortknotens in der unmittelbar vorhergehenden Schicht bestimmt wurde, aufweist:
als Reaktion darauf, dass der Ähnlichkeitsgrad des Wortknotens in der unmittelbar vorhergehenden Schicht eine Aktivierungsbedingung einer aktuellen Schicht, in der sich die unmittelbar vorhergehende Schicht befindet, nicht erfüllt, Bestimmen eines Aktivierungsergebnisses des Wortknotens in der unmittelbar vorhergehenden Schicht dahingehend, dass sich die aktuelle Schicht in einem inaktiven Zustand befindet; und
Bestimmen eines Ähnlichkeitsgrades des Wortknotens in der nächsten Schicht auf der Grundlage der Hidden-Layer-Vektor-Ausdrucksinformationen eines Wortknotens in der aktuellen Schicht im inaktiven Zustand, und Anpassen der Aktivierung des Wortknotens in der nächsten Schicht auf der Grundlage des Ähnlichkeitsgrades des Wortknotens in der nächsten Schicht und einer Aktivierungsbedingung der nächsten Schicht.

10. Verfahren nach einem der Ansprüche 1 bis 3, des Weiteren aufweisend:
Erhalten, für jede der verschiedenen Informationsdimensionen, einer Vielzahl von verschiedenen Teilen von Gegenstandsinformationen, die der Informationsdimension entsprechen, und Zusammenführen der Vielzahl von verschiedenen Teilen von Gegenstandsinformationen, um einen jeweiligen der Wortbäume der verschiedenen Informationsdimensionen zu erzeugen, wobei optional die verschiedenen Informationsdimensionen des Weiteren Autorisierungsinformationen des Benutzers aufweisen.

11. Verfahren nach Anspruch 10, bei dem das Zusammenführen der Vielzahl von verschiedenen Teilen von Gegenstandsinformationen zum Erzeugen des jeweiligen der Wortbäume der verschiedenen Informationsdimensionen aufweist:
sequentielles Erhalten von Wortvektoren in jeweiligen Teilen von Gegenstandsinformationen, die einer Zieldimension von Informationen entsprechen, und Konstruieren von Wortknoten eines Wortbaums, der der Zieldimension von Informationen entspricht, durch Zusammenführen identischer Wortvektoren in Übereinstimmung mit einer Sequenz der Wortvektoren in den jeweiligen Teilen von Gegenstandsinformationen.

12. Verfahren nach Anspruch 11, bei dem die Wortknoten des Wortbaums, der der Zieldimension der Information entspricht, Wurzelknoten aufweisen, und bei dem das Konstruieren der Wortknoten des Wortbaums, der der Zieldimension der Information entspricht, durch Zusammenführen der identischen Wortvektoren aufweist:
Erhalten von ersten Wortvektoren, die sich an Satzanfängen befinden, für die jeweiligen Gegenstandsinformationen; und
als Reaktion auf das Fehlen identischer erster Wortvektoren, Bestimmen der ersten Wortvektoren, die sich an den Satzanfängen befinden, als unabhängige Wurzelknoten des Wortbaums, der der Zieldimension der Information entspricht, und/oder als Reaktion auf das Vorhandensein identischer erster Wortvektoren, Konstruieren der identischen ersten Wortvektoren als ein Wurzelknoten in dem Wortbaum, der der Zieldimension der Information entspricht.

13. Verfahren nach Anspruch 11 oder 12, bei dem die Wortknoten des Wortbaums, der der Zieldimension der Information entspricht, Blattknoten aufweisen, und bei dem das Konstruieren der Wortknoten des Wortbaums, der der Zieldimension der Information entspricht, durch Zusammenführen der identischen Wortvektoren aufweist:
sequentielles Erhalten von zweiten Wortvektoren, die den Satzanfängen folgen, für die jeweiligen Gegenstandsinformationen; und
in Reaktion auf das Vorhandensein identischer zweiter Wortvektoren mit identischen Präfix-Wortvektoren vor den identischen zweiten Wortvektoren, Zusammenführen der identischen zweiten Wortvektoren mit den identischen Präfix-Wortvektoren als einen Blattknoten in dem Wortbaum, der der Zieldimension der Information entspricht; und/oder als Reaktion auf das Vorhandensein der identischen zweiten Wortvektoren mit unterschiedlichen Präfix-Wortvektoren vor den identischen zweiten Wortvektoren, Konstruieren der identischen zweiten Wortvektoren mit den unterschiedlichen Präfix-Wortvektoren als unabhängige Blattknoten in dem Wortbaum, der der Zieldimension der Information entspricht; und/oder als Reaktion auf das Fehlen von identischen zweiten Wortvektoren, Konstruieren der zweiten Wortvektoren als unabhängige Blattknoten in dem Wortbaum, der der Zieldimension der Information entspricht.

14. Im Fahrzeug montiertes Endgerät, aufweisend:
einen Prozessor; und
einen Speicher, in dem ein Computerprogramm gespeichert ist, das auf dem Prozessor ausgeführt werden kann;
wobei das Computerprogramm, wenn es von dem Prozessor ausgeführt wird, die Schritte des Spracherkennungsverfahrens nach einem der Ansprüche 1 bis 13 implementiert.

15. Computerlesbares Speichermedium, auf dem ein Computerprogramm gespeichert ist, wobei das Computerprogramm, wenn es von einem Prozessor ausgeführt wird, die Schritte des Spracherkennungsverfahrens nach einem der Ansprüche 1 bis 13 implementiert.

## Revendications

1. Procédé de reconnaissance vocale, comprenant
obtenir (401), en réponse à une demande vocale d'un utilisateur, différentes dimensions d'informations concernant la demande vocale de l'utilisateur, les différentes dimensions d'informations comprenant des informations de position de l'utilisateur et des informations vocales de la demande vocale, les informations vocales de la demande vocale étant déterminées sur la base d'une identification vocale, les informations de position de l'utilisateur et les informations vocales de la demande vocale comprenant chacune un arbre de mots d'une dimension d'informations correspondante, des arbres de mots des différentes dimensions d'informations étant utilisés pour être fusionnés en un arbre de mots composé; et
reconnaître (402) la demande vocale de l'utilisateur sur la base de l'arbre de mots composé.

2. Procédé selon la revendication 1, dans lequel reconnaître la demande vocale de l'utilisateur sur la base de l'arbre de mots composé comprend:
adapter dynamique, sur la base de l'arbre de mots composé, d'une activation de la demande vocale de l'utilisateur dans l'arbre de mots composé; et
reconnaître la demande vocale de l'utilisateur sur la base de l'activation.

3. Procédé selon la revendication 1 ou 2, dans lequel l'arbre de mots composé comprend un troisième arbre de mots, un quatrième arbre de mots et un cinquième arbre de mots; et
le procédé comprenant en outre
fusionner hors ligne un premier arbre de mots obtenu sur la base des informations de position de l'utilisateur et un deuxième arbre de mots obtenu sur la base des informations vocales de la demande vocale pour obtenir le troisième arbre de mots composé; ou
obtenir d'informations d'autorisation de l'utilisateur, obtenir du quatrième arbre de mots sur la base des informations d'autorisation, et fusionner en ligne du quatrième arbre de mots et du troisième arbre de mots pour obtenir le cinquième arbre de mots composé; ou
fusionner en ligne le quatrième arbre de mots et le premier arbre de mots pour obtenir un sixième arbre de mots composé.

4. Procédé selon la revendication 3, dans lequel fusionner hors ligne du premier arbre de mots obtenu sur la base des informations de position de l'utilisateur et du deuxième arbre de mots obtenu sur la base des informations vocales de la demande vocale pour obtenir le troisième arbre de mots composé comprend:
obtenir séquentiellement des vecteurs de mots situés à des noeuds racines dans le premier arbre de mots et le second arbre de mots, et fusionner les vecteurs de mots situés aux noeuds racines dans le premier arbre de mots et le second arbre de mots en fusionnant des vecteurs de mots identiques; et
obtenir séquentiellement des vecteurs de mots situés à des noeuds de feuille dans le premier arbre de mots et le second arbre de mots, et fusionner les vecteurs de mots situés aux noeuds de feuille dans le premier arbre de mots et le second arbre de mots en fusionnant des vecteurs de mots identiques avec des vecteurs de mots préfixes identiques.

5. Procédé selon la revendication 2, dans lequel adapter dynamique de l'activation de la demande vocale de l'utilisateur dans l'arbre de mots composé sur la base de l'arbre de mots composé comprend:
déterminer un degré de similarité entre la demande vocale de l'utilisateur et chaque noeud de mot dans l'arbre de mots composé; et
ajuster une activation de chaque noeud de mot sur la base de l'arbre de mots composite et du degré de similarité, l'arbre de mots composé comprenant un troisième arbre de mots, un quatrième arbre de mots et un cinquième arbre de mots.

6. Procédé selon la revendication 5, dans lequel chaque noeud de mot dans l'arbre de mots composé comprend des informations d'expression de vecteur de couche cachée correspondantes, et dans lequel déterminer du degré de similarité entre la demande vocale de l'utilisateur et chaque noeud de mot dans l'arbre de mots composé comprend:
déterminer, pour chaque mot dans la demande vocale de l'utilisateur, un noeud de mot correspondant dans l'arbre de mots composé et obtenir les informations d'expression de vecteur de couche cachée du noeud de mot correspondant; et
comparer les informations d'expression de vecteur de couche cachée du noeud de mot correspondant aux informations d'expression de vecteur de couche cachée de chaque noeud de mot dans l'arbre de mots composé situé sur une couche suivante du noeud de mot correspondant pour obtenir un degré de similarité de chaque mot de la demande vocale de l'utilisateur dans l'arbre de mots composé.

7. Procédé selon la revendication 5 ou 6, dans lequel ajuster l'activation de chaque noeud de mot sur la base de l'arbre de mots composé et du degré de similarité comprend:
adapter une activation d'un noeud de mot dans une couche suivante sur la base d'un résultat d'activation déterminé pour un degré de similarité d'un noeud de mot dans la couche immédiatement précédente de la couche suivante, à partir d'un noeud racine de l'arbre de mots composé.

8. Procédé selon la revendication 7, dans lequel ajuster l'activation du noeud de mot dans la couche suivante sur la base du résultat d'activation déterminé pour le degré de similarité du noeud de mot dans la couche immédiatement précédente de la couche suivante comprend:
en réponse au fait que le degré de similarité du noeud de mot dans la couche immédiatement précédente satisfait une condition d'activation d'une couche actuelle dans laquelle la couche immédiatement précédente est située, adapter une activation du noeud de mot dans la couche immédiatement précédente en utilisant un multiplicateur d'activation de la couche actuelle et déterminer un résultat d'activation du noeud de mot dans la couche immédiatement précédente de telle sorte que la couche actuelle soit dans un état actif; et
déterminer un degré de similarité d'un noeud de mot suivant sur la base des informations d'expression de vecteur de couche cachée du noeud de mot dans la couche suivante dans un état actif, et ajuster l'activation du noeud de mot dans la couche suivante sur la base d'un degré de similarité du noeud de mot dans la couche suivante et d'une condition d'activation de la couche suivante.

9. Procédé selon la revendication 7 ou 8, dans lequel ajuster l'activation du noeud de mot dans la couche suivante sur la base du résultat d'activation déterminé pour le degré de similarité du noeud de mot dans la couche immédiatement précédente comprend:
en réponse au fait que le degré de similarité du noeud de mot dans la couche immédiatement précédente ne satisfait pas à une condition d'activation d'une couche actuelle dans laquelle se trouve la couche immédiatement précédente, déterminer un résultat d'activation du noeud de mot dans la couche immédiatement précédente de telle sorte que la couche actuelle est dans un état inactif; et
déterminer un degré de similarité du noeud de mot dans la couche suivante sur la base des informations d'expression de vecteur de couche cachée d'un noeud de mot dans la couche actuelle dans un état inactif, et ajuster l'activation du noeud de mot dans la couche suivante sur la base du degré de similarité du noeud de mot dans la couche suivante et d'une condition d'activation de la couche suivante.

10. Procédé selon l'une quelconque des revendications 1 à 3, comprenant en outre:
obtenir, pour chacune des différentes dimensions d'informations, d'une pluralité de parties différentes d'informations d'objet correspondant à la dimension d'informations, et fusionner de la pluralité de parties différentes d'informations d'objet pour produire l'un respectif des arbres de mots des différentes dimensions d'informations, dans lequel, éventuellement, les différentes dimensions d'informations comprennent en outre des informations d'autorisation de l'utilisateur.

11. Procédé selon la revendication 10, dans lequel fusionner de la pluralité de différentes parties d'informations d'objet pour produire de chacun des arbres de mots des différentes dimensions d'informations comprend:
obtenir séquentiellement de vecteurs de mots dans des parties respectives d'informations d'objet correspondant à une dimension cible d'informations, et construire de noeuds de mots d'un arbre de mots correspondant à la dimension cible d'informations en fusionnant des vecteurs de mots identiques conformément à une séquence des vecteurs de mots dans les parties respectives d'informations d'objet.

12. Procédé selon la revendication 11, dans lequel les noeuds de mots de l'arbre de mots correspondant à la dimension cible de l'information comprennent des noeuds racines, et dans lequel construire des noeuds de mots de l'arbre de mots correspondant à la dimension cible de l'information en fusionnent des vecteurs de mots identiques comprend:
obtenir les premiers vecteurs de mots situés en début de phrase pour les informations d'objet respectives; et
en réponse à l'absence de premiers vecteurs de mots identiques, déterminer les premiers vecteurs de mots situés en début de phrase comme des noeuds racines indépendants de l'arbre de mots correspondant à la dimension cible de l'information, et/ou en réponse à la présence de premiers vecteurs de mots identiques, construire les premiers vecteurs de mots identiques comme un noeud racine dans l'arbre de mots correspondant à la dimension cible de l'information.

13. Procédé selon la revendication 11 ou 12, dans lequel les noeuds de mots de l'arbre de mots correspondant à la dimension cible de l'information comprennent des noeuds feuilles, et dans lequel la construction des noeuds de mots de l'arbre de mots correspondant à la dimension cible de l'information en fusionnent des vecteurs de mots identiques comprend:
obtenir séquentiellement de seconds vecteurs de mots suivant les débuts de phrases pour les informations d'objet respectives; et
en réponse à la présence de seconds vecteurs de mots identiques avec des vecteurs de mots préfixes identiques avant les seconds vecteurs de mots identiques, fusionner les seconds vecteurs de mots identiques avec les vecteurs de mots préfixes identiques en tant que noeud feuille dans l'arbre de mots correspondant à la dimension cible des informations; et/ou en réponse à la présence des seconds vecteurs de mots identiques avec des vecteurs de mots préfixes différents avant les seconds vecteurs de mots identiques, construire les seconds vecteurs de mots identiques avec les différents vecteurs de mots préfixes comme des noeuds feuilles indépendants dans l'arbre de mots correspondant à la dimension cible des informations; et/ou en réponse à l'absence de seconds vecteurs de mots identiques, construire les seconds vecteurs de mots comme des noeuds feuilles indépendants dans l'arbre de mots correspondant à la dimension cible des informations.

14. Terminal monté sur véhicule, comprenant:
un processeur; et
une mémoire dans laquelle est stocké un programme informatique qui peut être exécuté sur le processeur;
dans lequel le programme informatique, lorsqu'il est exécuté par le processeur, met en oeuvre les étapes du procédé de reconnaissance vocale selon l'une quelconque des revendications 1 à 13.

15. Support de stockage lisible par ordinateur sur lequel est stocké un programme informatique, ledit programme informatique, lorsqu'il est exécuté par un processeur, mettant en oeuvre les étapes du procédé de reconnaissance vocale selon l'une quelconque des revendications 1 à 13.
